# EUROPEAN PATENT SPECIFICATION

(11) **EP 4 275 480 B1**
(45) Date of publication and mention of the grant of the patent: **16.07.2025**
(21) Application number: 22172549.2
(22) Date of filing: 10.05.2022
(51) Int. Cl.: A01F 15/10, A01D 90/04

(54) **CROP CUTTING DEVICE**
ERNTEGUTSCHNEIDEVORRICHTUNG
DISPOSITIF DE DÉCOUPE DE RÉCOLTE

(43) Date of publication of application: 15.11.2023
(73) Proprietor: CNH Industrial Belgium N.V., 8210 Zedelgem (BE)
(72) Inventor: Dewitte, Tomas H., 8890 Moorslede (BE); Liefooghe, Dries, 8690 Alveringem (BE); Devroe, Jeroen, 8770 Ingelmunster (BE); Claeys, Danny N.O., 8730 Oedelem (BE)
(74) Representative: CNH Industrial IP Department

(56) References cited:
- DE-A1- 4 139 499
- US-A- 4 612 941
- US-A1- 2020 093 068
- US-A1- 2021 212 264
- US-B2- 9 913 433

## Description

The present invention relates to a crop cutting device for agricultural machines or implements.

Agricultural machines or implements such as balers or self-loading wagons are often equipped with a cutting device equipped to crush the cut crop for different purposes. Other agricultural machines such as harvesters may also be equipped with such a cutting device.

The cutting device is usually arranged in crop channel of the baler, the loading wagon or other agricultural machine so that the crop is transported on a crop guiding surface towards a plurality of knives to be cut in contact with the knives' blades.

With regard to the crop channel, such crop cutting devices include a plurality of knives arranged side-by-side in rows, wherein the number of knives protruding next to one another from the crop guiding surface into the crop channel dictates the number of effective blades or edges and thus an achievable length of the cut crop. It is generally desirable to be able to select and use different numbers of blades to adapt to the particular application or harvesting conditions.

To protect the knives from damages by stones or other unwanted particles that are generally not shreddable or choppable and to enable a selection of a desired number of knives, it is customary for the knives to be pivotable relative to a frame of the cutting device so that each knife can be pivoted between a non-operating position and an operating position. In the non-operating position, however, the knife is in a position in which it is largely withdrawn from the crop channel, unable to cut crop. In the operating position, the knife is in a position in which it protrudes into the crop channel so that crop flowing past is crushed or cut in cooperation with the knife. For clamping and subsequent holding of the knife in the operating position each knife is associated with an operating or clamping unit, which has, for example, a spring element. Several mechanisms are used in the art to pivot the operating units together with the respective knife from the non-operating position into the operating position and vice versa. In view of the increasing number of installed knives in cutting devices as well as the high-acting forces, the back-and-forth movement of the knives presents a mechanical challenge.

DE 43 02 199 A1 discloses a crop cutting device including chopping knives protruding into a conveyor passage and cooperating with tines on a rotor. The knives are held in the working position by controlled supports, which release them together or individually to swing into the idle position. An elastic overload-protection system also allows the knives to swing briefly into this position on encountering foreign bodies. Each support consists of a spring-loaded thrust rod, engaging at one end in a positioning recess in its respective knife. The rods are supported by their springs on a common connecting cross-member, which is slid by one or more rams in relation to the knives. With its spring each thrust rod forms an overload-protection mechanism movable in relation to the cross-member. Each thrust rod is further coupled to a bar releasing or retaining it, so as to cut its knife in and out of use. The bar is provided with a downwardly protruding cam which is brought into and out of engagement with an edge of an opening by a lifting cam on a rotatable control shaft which cooperates with the bar.

DE 198 05 854 C1 discloses a crop cutting device in which each pivotable knife is operable by a spring loaded sliding bar carrying a roller. The end of each sliding bar carrying the roller is supported by an arm that is rotatable about a shaft. Some of the sliding bars have their support arms extend to various depths below the shaft. A blocking bar extending parallel to the shaft may be raised to different heights to bring it into blocking engagement with the extended arms of the various sliding bars, to block pivoting movement of the corresponding knife.

EP 2 653 025 A1 discloses a cutting device which includes a cam shaft that is operable to lift selected spring loaded arms from a first position in which they are bypassed by an actuator into a second position in which they are engaged by the actuator and brought into contact with respective knives. In this way only selected knives are extended. In the retracted position the knives still protrude slightly from the slotted plate in which they are arranged, thus forming an obstacle to the flow of the crop. This prior art device is fairly complex and in view of the very dusty environment is prone to failure as the spring loaded arms are repeatedly disengaged and the re-engaged by the actuator.

EP 2 110 014 A1 discloses a cutting device comprising a selection shaft that is received in circular openings in levers operating the knives. A narrow channel leads from an edge of each knife to each circular opening. The selection shaft has locally flattened parts which fit in the channels. By rotating the selection shaft it can either be locked in a circular recess to disable the corresponding knife or allowed to pass through the channel when the knife is moved to its extended position. In the retracted position, the knives are completely hidden under the lower wall of the crop inlet channel, thus rendering them inaccessible for maintenance or replacement. The design of this prior art device requires a relatively large space and the levers and shaft have relatively complex shapes. Moreover, the repeated movement of the shaft through the narrow channels is prone to jamming.

EP 1 609 354 A1 discloses a crop cutting device for harvested crop which includes a selector mechanism having blocking tabs. These tabs cooperate with roll pins extending crosswise through support rods engaging the knives. The blocking tabs are integrated into four separate strips fixed on a cylindrical tube. The tube can be lowered or raised to engage or disengage the blocking tabs. Here, the retracted knives still protrude slightly from the slotted plate in which they are arranged, thus impeding the flow of the crop. Since the tabs are arranged in strips they have a fixed spacing and cannot be rearranged by a user.

DE4139499A1 describes a self-loading wagon with a cutting device for stalk and leaf material. US 9913433 B2 describes a cutting assembly that comprises two oppositely facing sidewalls and two loading systems, each loading system comprising a transverse member that extends between and through the sidewalls, and two trays of knives. US 2020/093068 A1 describes a crop cutting device including knives pivotally mounted below a crop guiding surface. Each knife is pivotable between a retracted position in which it is located below the guiding surface and an extended position.

It is therefore the object of the present invention to provide a crop cutting device which overcomes at least some of the disadvantages of the prior art as listed above, which is compact in its structure, which enables a smooth, safe and remotely controllable knife movement as well as knife selection, which requires little installation space and which generally ensures a reliable and secure cutting function also in a very dusty environment.

This object is achieved by the subject matter of independent claim 1 of the present invention. Advantageous embodiments and aspects are described in the dependent claims.

According to one aspect of the invention, a crop cutting device for an agricultural machine according to claim 1 is provided.

Particularly the compact structure of the crop cutting device is an improvement with respect to the prior art because previously unused space can now be used for the movement of the knives. Further, the selection mechanism is relatively simple and robust. These effects are achieved by the novel concept of moving the knife axis instead of the protection system in order to activate or deactivate the knives. The selection chosen for each knife by the selector mechanism may advantageously determine the position of the knives after movement of the knife axis.

The frame comprises guiding means enabling the continuous movement the knife axis between a first stop associated with the retracted deactivated position and a second stop associated with the extended activated position. This ensures a defined start and stop of the knife axis representing the two major functional positions although further intermediate positions may also be assumed depending on the requirements of the cutting device. The guiding means are formed as a straight, linear slot in the frame or a curve with one or more curvatures in different directions. Also, a rotational movement of the knife axis may be incorporated into the guiding means.

In a further preferred embodiment, each knife protection unit may be pivotably connected to the frame around a common axis. This facilitates a compact and stable structure and avoids additional components.

According to another embodiment, each knife protection unit may comprise an engagement rod configured to engage each knife, preferably at a rear portion or a back surface of each knife. This enables a secure protection function of the crop cutting device because each knife follows a dedicated path together with the corresponding knife protection unit.

In further beneficial embodiments, each knife protection unit may comprise at least one arm or rod and at least one force absorbing member. The force absorbing member is configured to apply an absorption force on the knife protection unit upon a sudden movement of a knife out of the extended activated position caused by unwanted objects on the crop cutting surface. In embodiments, the at least one force absorbing member may comprise at least one spring member. This enables an individual retracting movement of a knife protection unit so as to protect each knife from damage by unknown objects. In alternative embodiments, the force absorbing member may be a hydraulic mechanism cooperating with a plurality of arms functioning as knife protection units attached to a common axis. Such arrangement may be called a bank protection system wherein the plurality of arms connected with each knife is forced to rotate from a first position to a second position as soon as the collision force of an unwanted object on the plurality of knives exceeds the pushing force of the hydraulic mechanism linked to the plurality of arms. That alternative technical solution has the advantage of a simple and effective construction. It is noted that more than one hydraulic mechanism may be linked to a plurality of arms or knife protection units along the rotation axis. In this way, a high number of knives may be protected by having a few hydraulic mechanisms arranged side-by-side.

According to preferred embodiments, the selector mechanism may comprise a rotatable shaft extending substantially perpendicular to the slots and including the engagement elements. Such a selector mechanism is mechanically robust and of a relatively simple structure while it ensures a solid and reliable selection function. Preferred engagement elements may be protrusions, recesses, plates, cams and the like.

In embodiments, the plurality of engagement elements may comprise a star-shape having between two and ten arms, preferably between three and eight arms, most preferably four arms which are optionally equally spaced along the circumference of the rotatable shaft. In alternative embodiments, the rotatable shaft may be formed as an eccentric shaft such as a crankshaft having, for example, eccentric cam elements which function as engagement elements.

In an advantageous embodiment, the crop cutting device may include at least one actuator, preferably a hydraulic actuator, configured to actuate the knife axis with respect to the frame. Such at least one actuator may involve manual, electrical, electromechanical or hydraulic actuation configured to be manually or remotely controlled. For example, it may be preferred that a user situated in a cabin of the agricultural machine can remotely control the activation and operation of the crop cutting device. This may include indicators about the actual status of the device and also operable control elements regarding its function.

In another embodiment, the back surface of each knife may comprise at least one engagement recess. Such recess ensures a firm engagement of each knife protection unit with its corresponding knife and thus facilitates the guidance of the movement of each knife.

According to another preferred embodiment, the crop cutting device may comprise a moveable blocking element configured to block the longitudinal extension of at least one knife protection unit. The blocking element may be moved in and out of a position near one end of the knife protection unit functioning as a stop for the longitudinal movement. If in position, the blocking element prevents any longitudinal movement of the knife protection unit in one direction. This may solve the problem of pushing the knives through contaminated slots in the crop guiding surface because the blocking elements prevent the knife protection units from conceding to the applied forces. The activating of any of the blocking elements may be as a single unit or as a plurality of blocking elements. It may also be possible to activate all blocking elements by movement of one single actuator which may be controlled manually or remotely from the cabin of the agricultural machine.

In further preferred embodiments, at least one knife protection unit may comprises a guiding plate. This guiding plate may be fixed to the frame and configured to guide each knife protection unit in longitudinal direction. Such structure further stabilizes the entire device improving the guiding function of each knife protection unit. It should be noted that the impact forces of unwanted objects may be significant so a strong guidance of each knife protection unit during movement of the knives and knife protection units is essential.

According to a further aspect of the invention, a method for automatically controlling a crop cutting device of an agricultural machine according to claim 12 is provided.

In a preferred embodiment of the method, upon sensing a predetermined fault status of the knives, an alarm signal may be provided to the user of the agricultural machine, preferably to the cabin of the driver of the agricultural vehicle.

According to a further embodiment, the method may include actively deblocking the longitudinal movement of the knife protection units so as to enable the safety mechanism of each of the knives.

The invention is now by example described under reference to the drawings in which:
- Fig. 1: is a schematic isometric view of a detail of a preferred embodiment of the crop cutting device according to the invention in a first position;
- Fig. 2: is a schematic isometric view of the embodiment shown in Fig. 1 seen from above with the crop guiding surface removed;
- Fig. 3: is a schematic isometric view of the embodiment shown in Fig. 1 seen from below;
- Fig. 4: is a schematic isometric view of a detail of the preferred embodiment of the crop cutting device according to the invention in a second position;
- Fig. 5: is a schematic isometric side view of the embodiment shown in Fig. 4 wherein the side plate and the first guide element are removed;
- Fig. 6: is a schematic isometric view of the embodiment shown in Fig. 4 seen from below;
- Fig. 7: is a schematic isometric view of a detail of the preferred embodiment of the crop cutting device according to the invention in a third position;
- Fig. 8: is a schematic isometric view of the embodiment shown in Fig. 7 seen from a different angle with the side plate removed;

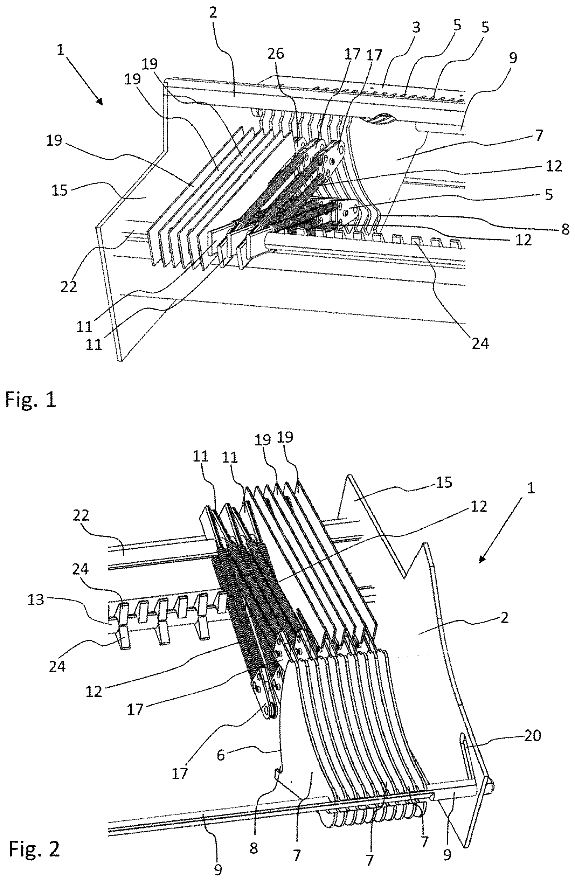

Fig. 1 shows in a schematic isometric view a detail of a preferred embodiment of the crop cutting device 1. It should be noted that to facilitate the understanding of the present invention some components have been omitted in the drawings. Thus, the drawings do not represent full technical drawings with all details necessary to provide a fully working crop cutting device. However, with the remaining essential components shown in the figures it should be possible for the skilled person to grasp the full inventive principle of the subject matter according to the invention.

Crop cutting device 1 comprises a frame 2 with a crop cutting surface 3 having a plurality of substantially parallel slots 5 extending in a direction of travel of the crop over the crop guiding surface 3. Frame 2 in the shown embodiment may include two side plates 15 which are connected to each other by a plurality of cross members 27 which provide the necessary stability and form a housing of the crop cutting device 1.

A plurality of knives 7 is arranged side-by-side below the crop cutting surface 3 wherein each knife 7 is aligned with a respective slot 5 and is pivotally mounted about a knife axis 9 which extends substantially perpendicular to the slots 5. The knives 7 are configured to be moved between a retracted deactivated position which is shown in the embodiment of Fig. 1 wherein each knife 7 is located substantially below the crop guiding surface 3, and an extended activated position (not shown in Fig. 1) wherein at least a cutting edge 10 of each knife 7 projects above the crop guiding surface 3.

A plurality of knife protection units 11 is included in the crop cutting device 1 wherein each knife protection unit 11 is pivotably connected to the frame 2. In the shown embodiment, the knife protection unit 11 may comprise a rotation portion connected to and enabling rotation around a common axis 22, two parallel rod portions equipped with corresponding spring members 12 and an engagement rod 17 which is configured to engage with a back surface 6 of each knife 7. It must be noted that each knife protection unit 11 may assume another structure having a function to be configured to engage with the respective knife in the retracted the activated position or in the extended activated position. In the shown embodiment, the engagement rod 17 includes two plates essentially parallel to the respective knife 7 connected by at least one connecting element forming a space between the two plates the width of which is wider than the thickness of the back surface 6 of each knife 7. In other words, the engagement rod 17 is designed such that a stable engagement of the knife protection unit 11 with the respective knife 7 is ensured. The engagement rod 17 may furthermore comprise means for guidance which will be explained further below.

In the shown embodiment, the knife protection units 11 are each divided by guiding plates 19 which are oriented essentially parallel to the knives 7. Each guiding plate 19 may comprise means for guiding the adjacent knife protection unit along a predetermined path so as to increase the stability of the crop cutting device. This may be necessary due to the high forces exerted on the knives 7 in their longitudinal extension onto the knife protection units 11. As the engagement point where the back surface 6 of each knife 7 engages with the engagement route 17 is approximately midway between the knife axis 9 and the common axis 22 some kind of lateral guidance may be necessary in order to avoid a lateral movement of the knife protection units 11 out of their predetermined plane of movement. In preferred embodiments said means for guiding may comprise a long hole in which a corresponding pin or bracket on the two plates of the engagement rod 17 may be slidably engaged.

Furthermore, the crop guiding device 1 includes a selector mechanism configured to selectively engage one or more of the plurality of knife protection units 11 such that the respective knife 7 can be brought from the retracted deactivated position into the extended activated position. The selector mechanism comprises a plurality of engagement elements each configured to engage with the respective knife protection 11. In the shown embodiment, the engagement elements are formed by arms 24 protruding from a rotatable shaft 13. The rotatable shaft 13 is essentially parallel to the common axis 22 and the knife axis 9 and may be manually and/or remotely operated by a corresponding actuator (not shown). In exemplary embodiments, the selector mechanism may select all knives 7, it may select 50% of the knives 7, or it may select only a third of the knives 7 for the activated position depending on the type of crop or on the speed of the harvesting machine having the crop cutting device 1.

As the selector mechanism, i.e. the rotatable shaft 13 with the plurality of arms 24, is positioned between the common axis 22 and the back surface 6 of the knives 7 in an intermediate area of the knife protection units 11, it is the engagement with the knife protection units 11 in this intermediate area which determines the selection of each knife protection unit 11. In the shown embodiment, it can be seen that two knife protection units 11 sit on two respective arms 24 on the rotatable shaft 13 so that they are lifted on their free end with the engagement rod 17, and that three knife protection units 11 are located between two respective arms 24 of the rotatable shaft 13 such that the knife protection units 11 remain seated directly on the rotatable shaft 13. Therefore, the selector mechanism determines whether a knife protection unit 11 is rotated upwards or stays in the lower position. Such position is essential when moving the knife axis 9 so that the knives 7 engage with the engagement rod 17 of each knife protection unit 11.

In the embodiment shown in Fig. 1, the knives 7 are located with their cutting edge 10 below the crop cutting surface 3, they are therefore in the retracted deactivated position. In this position, the knife axis 9 is in the most retracted position within the guiding means 20 (not visible in Fig. 1). The movement of the knife axis 9 will be explained further down below with respect to the remaining figures.

Fig. 2 is a partial isometric view of the preferred embodiment depicted in Fig. 1, however viewed from an essentially opposite angle and with the crop guiding surface 3 removed such that the interior of the crop cutting device 1 may be visible in a better way. As most of the components have already been described in relation to Fig. 1 above, a redundant description is omitted. Rather, emphasis is made with respect to those features which are now visible. Firstly, the rotatable shaft 13 with the arms 24 is shown in a clear fashion in Fig. 2. It can be seen that the leftmost knife protection unit 11 is positioned in a downwardly facing direction which means that the middle area of the knife protection unit 11 having the spring member 12 is seated directly on the rotatable shaft 13 but not on the upper edge of an arm 24. This means that in the current position of the selector mechanism this particular knife protection unit 11 is not selected. Further, it can be seen that the engagement rods 17 may be guided along the guiding means formed in or on each of the guiding plates 19 which are firmly attached to the frame 2 and provide the required stability for the movement of the knives 7 and the knife protection units 11.

Another feature which is visible in Fig. 2 but not in Fig. 1 is the guiding means 20 which determines the movement of the knife axis 9 which may be considered a central aspect of the present invention. In the shown embodiment, the guiding means 20 are formed as a long hole in the side plate 15 of frame 2. As already mentioned, the position of the knife axis 9 as shown is the fully retracted deactivated position which means that all knives 7 are positioned below the crop guiding surface 3 (not shown in Fig. 2). It must be mentioned that the crop cutting device 1 according to the invention may comprise an actuator configured for the movement of knife axis 9. In a preferred embodiment, said actuator may be a hydraulic cylinder or other suitable actuator which may be manually or remotely controlled. A remote-controlled hydraulic cylinder may be controlled from the cabin of the agricultural machine where the user or driver is seated when operating the crop cutting device 1. In addition, it should be noted that the guiding means 20 need not be a linear or straight long hole. It could also be formed as a curved path. In addition, the knife axis 9 may be rotatable so as to effect a movement of the knives 7 in a direction perpendicular to the knife axis 9.

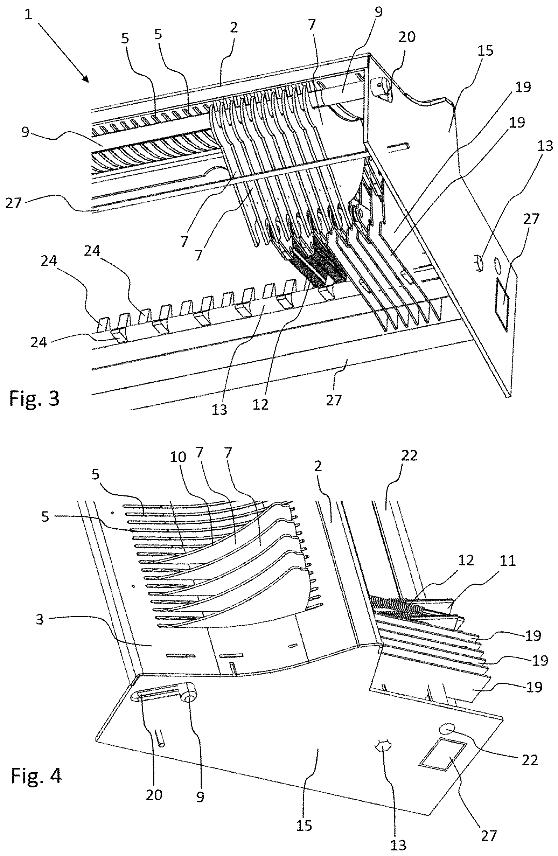

Fig. 3 shows the same preferred embodiment as depicted in Figs. 1 and 2 but again viewed from a different angle, this time from below the crop cutting device 1. Complementary to the previous figures, Fig. 3 shows a cross member 27 as part of the frame 2 wherein the cross member 27 comprises a rectangular cross-section. Furthermore, it can be seen that the leftmost knife protection unit 11 is situated in the lowest position wherein it is seated directly on the rotatable shaft 13 and not on any of the adjacent arms 24 meaning that said particular knife protection unit 11 has not been selected by the selective mechanism. Additionally, the engagement of the knives 7 with the knife axis 9 can be seen. The respective end of the knife 7 comprises a U-shaped recess for receiving the knife axis 9 in such a way that the engagement between each knife 7 and the knife axis 9 cannot be lost when moving the knife axis 9. Furthermore this configuration enables a rapid and simple replacement of a knife 7 should this be needed due to wear or destruction.

Fig. 4 shows a detailed isometric view of the preferred embodiment of the crop cutting device 1 according to the invention in a second position wherein a number of knives 7 are positioned in the fully extended activated position. As can clearly be seen, the knife axis 9 has now moved to the rightmost position within guiding means 20 such that the crop cutting device 1 assumes the extended activated position. Consequently, the knives 7 selected by the selector mechanism protrude through the slots 5 beyond the crop guiding surface 3 such that the cutting edge 10 faces the material to be cut in the transport channel of the crop cutting device 1.

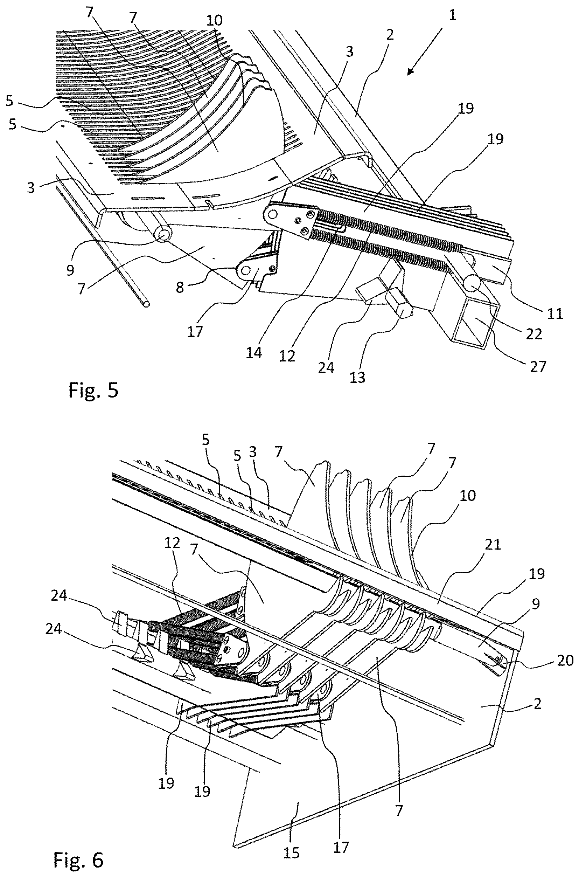

Fig. 5 shows the embodiment of Fig. 4 in the second position wherein the side plate 15 and the first guiding plate 19 have been removed for illustrative purposes so as to enhance the understanding of the functionality of the crop cutting device 1. Again, only the important and visible features are described. Most importantly, the first knife 7 when viewed from the open side of the device has been selected by the selector mechanism and is shown in the fully extended activated position. The rotatable shaft 13 is positioned such that an arm 24 is extended upright and that the lower spring member 12 of the first knife protection unit 11 rests on the upper edge of said arm 24. It should be mentioned that these figures are for explanatory purposes only so that the knife protection unit 11 may entirely fulfill its function of protecting the respective knife 7. Said function is that upon encountering an obstacle in the channel of the crop cutting device 1 each knife protection unit 11 may compress their spring members 12 and be moved backwards guided along the long hole 14 in the guiding plates 19. The frictional conditions of the respective surfaces of the spring member 12 and the respective arm 24 are designed such that a movement across the upper edge of the arm 24 is possible.

Fig. 6 shows the preferred embodiment in the same position as previously shown in Figs. 4 and 5 but from a different viewing angle, this time from below. Here, it can be seen that the leftmost knife 7 has not been selected by the selector mechanism. Therefore the respective knife protection unit 11 engages the engagement recess 8 of the respective knife 7 but is still in the lower position such that the movement of the knife axis 9 will not move the cutting edge 10 of the knife 7 through the corresponding slot 5 in the crop guiding surface 3. As already mentioned above, the leftmost knife protection unit 11 rests with its lower spring member 12 directly on the rotatable shaft 13 which means that it stays in the lowermost position. The respective knife 7 is therefore not selected.

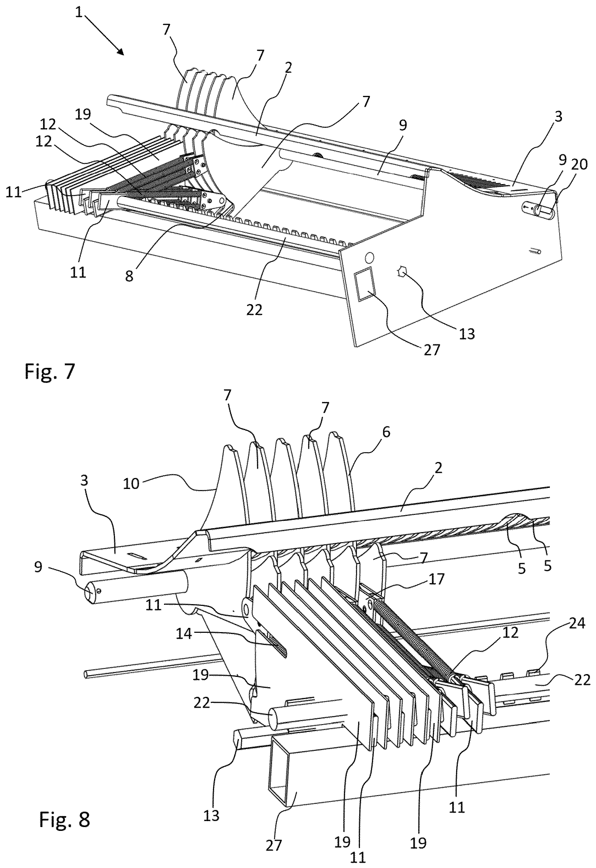

Fig. 7 shows a detailed isometric view of the preferred embodiment of the crop cutting device 1 according to the invention in a third position wherein a number of knives 7 are positioned in about halfway to the extended activated position. This is most noticeable when looking at the guiding means 20 where the position of the knife axis 9 is approximately in the middle of the respective long hole. Thus, the extent of protrusion of each knife 7 beyond the crop guiding surface 3 is significantly less than in the fully extended position described above. It can also be seen that the knives 7 which are not selected by the selector mechanism remain in the retracted deactivated position with the cutting edge 10 staying below the crop guiding surface 3.

Fig. 8 shows the preferred embodiment in the same position as shown in Fig. 7.As the side plate has been omitted in the drawing, the view into the interior of the crop cutting device 1 reveals the long hole 14 on the guiding plate 19 of the leftmost knife protection unit 11. It also shows the intermediate extension of each of the selected knives 7 with the engagement rods 17 engaged with the engagement recesses 8 of the selected knives 7.

A number of additional and/or optional features is not visible in the preferred embodiment shown in the figures. For example, the selector mechanism may be located above the knife protection units having a similar configuration with a second selection shaft having arms for a selection of the ends of the knife protection units. The common axis as in the shown embodiments may then act as a selection axis having arms as described, and the second selection shaft may push on the end of a knife protection unit wherein the other end of the knife protection unit with the engagement rod will not fall down. In other words, those knife protection units which are not selected by the second selection shaft will move into a non-selected position.

With the present invention, a crop cutting device has been provided which enables a smooth, safe and remotely controllable knife selection, which requires little installation space and which generally ensures a reliable and secure cutting function also in a very dusty environment.

### List of reference numbers:

- 1: crop cutting device
- 2: frame
- 3: crop guiding surface
- 5: slots
- 6: back surface
- 7: knives
- 8: engagement recess
- 9: knife axis
- 10: cutting edge
- 11: knife protection unit
- 12: spring member
- 13: rotatable shaft
- 14: long hole
- 15: side plate
- 17: engagement rod
- 18: attachment bracket
- 19: guiding plate
- 20: guiding means
- 21: /
- 22: common axis
- 24: arm
- 27: cross member

## Claims

1. Crop cutting device (1) for an agricultural machine comprising:
a frame (2) with a crop guiding surface (3) having a plurality of substantially parallel slots (5) extending in a direction of travel of the crop over the crop guiding surface (3), wherein the frame comprises guiding means (20) formed as a straight, linear or curved long hole,
a plurality of knives (7) arranged side-by-side and pivotally mounted below the crop guiding surface (3), wherein each knife (7) is aligned with a respective slot (5) and is pivotable about a knife axis (9) extending substantially perpendicular to the slots (5) between a retracted deactivated position in which each knife (7) is located substantially below the crop guiding surface (3) and an extended activated position, wherein at least a cutting edge (10) of each knife (7) projects above said guiding surface (3), wherein the guiding means enable the continuous movement of the knife axis (9) between a first stop associated with a retracted deactivated position and a second stop associated with an extended activated position;
a plurality of knife protection units (11), each knife protection unit (11) being pivotably connected to the frame (2) and being configured to engage with a respective knife (7) in the retracted deactivated position or in the extended activated position;
a selector mechanism configured to selectively engage one or more of the plurality of knife protection units (11) such that the respective knife (7) can be brought from the retracted deactivated position into the extended activated position, the selector mechanism including a plurality of engagement elements, each engagement element configured to engage with the respective knife protection unit (11);
wherein the knife axis (9) is continuously moveable via the guiding means (20) with respect to the frame (2); and
wherein each knife (7) by movement of the knife axis (9) is configured to be engaged with the respective knife protection unit (11) to assume either the extended activated position or, alternatively, the retracted deactivated position.

2. Crop cutting device (1) according to any of the previous claims, **characterized in that** each knife protection unit (11) is pivotably connected to the frame (2) around a common axis (22).

3. Crop cutting device (1) according to any of the previous claims, **characterized in that** each knife protection unit (11) comprises an engagement rod (17) configured to engage each knife (7), preferably at a rear portion or a back surface (6).

4. Crop cutting device (1) according to any of the previous claims, **characterized in that** each knife protection unit (11) comprises at least one rod and at least one force absorbing member (12).

5. Crop cutting device (1) according to any of the previous claims, **characterized in that** the selector mechanism comprises a rotatable shaft (13) extending substantially perpendicular to the slots (5) and including the engagement elements.

6. Crop cutting device (1) according to any of the previous claims, **characterized in that** it includes at least one actuator, preferably a hydraulic actuator, configured to actuate the knife axis (9) with respect to the frame (2).

7. Crop cutting device (1) according to claim 6, **characterized in that** the at least one actuator involves manual, electrical, electromechanical or hydraulic actuation configured to be manually or remotely controlled.

8. Crop cutting device (1) according to any of the previous claims, **characterized in that** the plurality of engagement elements comprises a star-shape having between two and ten arms (24), preferably between three and eight arms (24), most preferably four arms (24) which are optionally equally spaced along the circumference of the rotatable shaft (13).

9. Crop cutting device (1) according to any of claims 3 to 8, **characterized in that** the back surface (6) comprises at least one engagement recess (8).

10. Crop cutting device (1) according to any of the previous claims, **characterized in that** it comprises a moveable blocking element configured to block the longitudinal extension of at least one knife protection unit (11).

11. Crop cutting device (1) according to any of the previous claims, **characterized in that** at least one knife protection unit (11) comprises a guiding plate (19).

12. Method for automatically controlling a crop cutting device (1) of an agricultural machine according to any of the previous claims comprising:
providing a crop cutting device (1) in an inoperative status, preferably when the agricultural machine is not moving,
actively blocking the longitudinal movement of the knife protection units (11) so as to block the safety mechanism of each of the knives (7),
activating the selector mechanism to as to engage all knives (7) with the respective knife protection unit (11),
bringing the knives (7) into the extended activated position by respective movement of the knife axis (9) with respect to the frame (2),
stopping the movement of the knife axis (9) upon sensing a predetermined fault status of the knives (7),
if a predetermined fault status is sensed, manually checking the proper extension of each knife (7) out of each respective slot (5) of the crop guiding surface (3) by a user, and
returning the knives (7) from the extended activated position into the retracted deactivated position.

13. Method for automatically controlling a crop cutting device (1) according to claim 12, **characterized in that** upon sensing a predetermined fault status of the knives (7) an alarm signal is provided to the user of the agricultural machine, preferably to the cabin of the driver of the agricultural vehicle.

14. Method for automatically controlling a crop cutting device (1) according to claim 12 or 13, **characterized in that** it further comprises
actively deblocking the longitudinal movement of the knife protection units (11) so as to enable the safety mechanism of each of the knives (7).

## Patentansprüche

1. Vorrichtung (1) zum Schneiden von Erntegut für eine landwirtschaftliche Maschine mit:
einem Rahmen (2) mit einer Erntegutführungsfläche (3), die eine Mehrzahl im Wesentlichen parallel verlaufender Schlitze (5) in einer Bewegungsrichtung des Ernteguts über die Erntegutführungsfläche (3) aufweist, wobei der Rahmen Führungselemente (20) aufweist, die als gerade, lineare oder gekrümmte Langlöcher ausgebildet sind,
einer Mehrzahl von Messern (7), die nebeneinander angeordnet und schwenkbar unterhalb der Erntegutführungsfläche (3) montiert sind, wobei jedes Messer (7) einem jeweiligen Schlitz (5) zugeordnet ist und um eine Messerachse (9) schwenkbar ist, die im Wesentlichen senkrecht zu den Schlitzen (5) verläuft, zwischen einer eingefahrenen deaktivierten Position, in der sich jedes Messer (7) im Wesentlichen unterhalb der Erntegutführungsfläche (3) befindet, und einer ausgefahrenen aktivierten Position, in der mindestens eine Schneidkante (10) jedes Messers (7) über die Führungsfläche (3) hinausragt, wobei die Führungselemente die kontinuierliche Bewegung der Messerachse (9) zwischen einem ersten Anschlag, der mit der eingefahrenen deaktivierten Position verbunden ist, und einem zweiten Anschlag, der mit der ausgefahrenen aktivierten Position verbunden ist, ermöglichen;
einer Mehrzahl von Messerschutzeinheiten (11), wobei jede Messerschutzeinheit (11) schwenkbar mit dem Rahmen (2) verbunden und dazu eingerichtet ist, mit einem jeweiligen Messer (7) in der eingefahrenen deaktivierten Position oder in der ausgefahrenen aktivierten Position in Eingriff zu stehen;
eine Auswahlmechanismus, der dazu eingerichtet ist, wahlweise eine oder mehrere der Mehrzahl von Messerschutzeinheiten (11) in Eingriff zu bringen, sodass das jeweilige Messer (7) von der eingefahrenen deaktivierten Position in die ausgefahrene aktivierte Position überführt werden kann, wobei der Auswahlmechanismus eine Mehrzahl von Eingriffselementen umfasst, wobei jedes Eingriffselement dazu eingerichtet ist, mit der jeweiligen Messerschutzeinheit (11) in Eingriff zu stehen;
wobei die Messerachse (9) über die Führungselemente (20) kontinuierlich relativ zum Rahmen (2) bewegbar ist; und
wobei jedes Messer (7) durch Bewegung der Messerachse (9) dazu eingerichtet ist, mit der jeweiligen Messerschutzeinheit (11) in Eingriff zu treten, um entweder die ausgefahrene aktivierte Position oder alternativ die eingefahrene deaktivierte Position einzunehmen.

2. Vorrichtung (1) zum Schneiden von Erntegut nach einem der vorhergehenden Ansprüche, **dadurch gekennzeichnet, dass** jede Messerschutzeinheit (11) schwenkbar um eine gemeinsame Achse (22) mit dem Rahmen (2) verbunden ist.

3. Vorrichtung (1) zum Schneiden von Erntegut nach einem der vorhergehenden Ansprüche, **dadurch gekennzeichnet, dass** jede Messerschutzeinheit (11) eine Eingriffsstange (17) aufweist, die dazu eingerichtet ist, mit jedem Messer (7), vorzugsweise an einem hinteren Abschnitt oder einer Rückseite (6), in Eingriff zu stehen.

4. Vorrichtung (1) zum Schneiden von Erntegut nach einem der vorhergehenden Ansprüche, **dadurch gekennzeichnet, dass** jede Messerschutzeinheit (11) mindestens eine Stange und mindestens ein Kraftaufnahmeelement (12) aufweist.

5. Vorrichtung (1) zum Schneiden von Erntegut nach einem der vorhergehenden Ansprüche, **dadurch gekennzeichnet, dass** der Auswahlmechanismus eine drehbare Welle (13) aufweist, die im Wesentlichen senkrecht zu den Schlitzen (5) verläuft und die Eingriffselemente umfasst.

6. Vorrichtung (1) zum Schneiden von Erntegut nach einem der vorhergehenden Ansprüche, **dadurch gekennzeichnet, dass** sie mindestens einen Aktuator aufweist, vorzugsweise einen hydraulischen Aktuator, der dazu eingerichtet ist, die Messerachse (9) relativ zum Rahmen (2) zu betätigen.

7. Vorrichtung (1) zum Schneiden von Erntegut nach Anspruch 6, **dadurch gekennzeichnet, dass** der mindestens eine Aktuator eine manuelle, elektrische, elektromechanische oder hydraulische Betätigung aufweist, die manuell oder ferngesteuert steuerbar ist.

8. Vorrichtung (1) zum Schneiden von Erntegut nach einem der vorhergehenden Ansprüche, **dadurch gekennzeichnet, dass** die Mehrzahl der Eingriffselemente eine Sternform mit zwei bis zehn Armen (24), vorzugsweise mit drei bis acht Armen (24), besonders bevorzugt mit vier Armen (24) aufweist, die optional äquidistant entlang des Umfangs der drehbaren Welle (13) verteilt sind.

9. Vorrichtung (1) zum Schneiden von Erntegut nach einem der Ansprüche 3 bis 8, **dadurch gekennzeichnet, dass** die Rückseite (6) mindestens eine Eingriffsaussparung (8) aufweist.

10. Vorrichtung (1) zum Schneiden von Erntegut nach einem der vorhergehenden Ansprüche, **dadurch gekennzeichnet, dass** sie ein bewegbares Sperrelement aufweist, das dazu eingerichtet ist, die Längserstreckung von mindestens einer Messerschutzeinheit (11) zu blockieren.

11. Vorrichtung (1) zum Schneiden von Erntegut nach einem der vorhergehenden Ansprüche, **dadurch gekennzeichnet, dass** mindestens eine Messerschutzeinheit (11) eine Führungsplatte (19) aufweist.

12. Verfahren zur automatischen Steuerung einer Vorrichtung (1) zum Schneiden von Erntegut einer landwirtschaftlichen Maschine nach einem der vorhergehenden Ansprüche, mit folgenden Schritten:
Bereitstellen einer Vorrichtung (1) zum Schneiden von Erntegut in einem inaktiven Zustand, vorzugsweise wenn sich die landwirtschaftliche Maschine nicht bewegt,
aktives Blockieren der Längsbewegung der Messerschutzeinheiten (11), um den Sicherheitsmechanismus jedes Messers (7) zu blockieren,
Aktivieren des Auswahlmechanismus, um alle Messer (7) mit der jeweiligen Messerschutzeinheit (11) in Eingriff zu bringen,
Überführen der Messer (7) in die ausgefahrene aktivierte Position durch entsprechende Bewegung der Messerachse (9) relativ zum Rahmen (2),
Stoppen der Bewegung der Messerachse (9) beim Erkennen eines vorgegebenen Fehlerzustands der Messer (7),
manuelles Überprüfen der ordnungsgemäßen Ausfahrposition jedes Messers (7) aus dem jeweiligen Schlitz (5) der Erntegutführungsfläche (3) durch einen Benutzer beim Erkennen eines Fehlerzustands, und
Rückführen der Messer (7) aus der ausgefahrenen aktivierten Position in die eingefahrene deaktivierte Position.

13. Verfahren zur automatischen Steuerung einer Vorrichtung (1) zum Schneiden von Erntegut nach Anspruch 12, **dadurch gekennzeichnet, dass** beim Erkennen eines vorgegebenen Fehlerzustands der Messer (7) ein Alarmsignal an den Benutzer der landwirtschaftlichen Maschine, vorzugsweise an die Fahrerkabine des landwirtschaftlichen Fahrzeugs, ausgegeben wird.

14. Verfahren zur automatischen Steuerung einer Vorrichtung (1) zum Schneiden von Erntegut nach Anspruch 12 oder 13, **dadurch gekennzeichnet, dass** es ferner umfasst:
aktives Entsperren der Längsbewegung der Messerschutzeinheiten (11), um den Sicherheitsmechanismus jedes Messers (7) zu ermöglichen.

## Revendications

1. Dispositif de coupe de récolte (1) pour une machine agricole comprenant :
un châssis (2) avec une surface de guidage de récolte (3) comportant une pluralité de fentes sensiblement parallèles (5) s'étendant dans un sens de déplacement de la récolte sur la surface de guidage de récolte (3), dans lequel le châssis comprend des moyens de guidage (20) en forme de long orifice droit, linéaire ou incurvé,
une pluralité de couteaux (7) disposés côte à côte et montés de manière pivotante sous la surface de guidage de récolte (3), dans laquelle chaque couteau (7) est aligné avec une fente (5) respective et peut pivoter autour d'un axe de couteau (9) s'étendant sensiblement perpendiculairement aux fentes (5) entre une position désactivée rétractée dans laquelle chaque couteau (7) est situé sensiblement sous la surface de guidage de récolte (3) et une position activée étendue, dans laquelle au moins un bord tranchant (10) de chaque couteau (7) fait saillie au-dessus de ladite surface de guidage (3), dans laquelle les moyens de guidage permettent le mouvement continu de l'axe de couteau (9) entre une première butée associée à une position désactivée rétractée et une seconde butée associée à une position activée étendue ;
une pluralité d'unités de protection de couteau (11), chaque unité de protection de couteau (11) étant raccordée de manière pivotante au châssis (2) et étant configurée pour se mettre en prise avec un couteau respectif (7) dans la position désactivée rétractée ou dans la position activée étendue ;
un mécanisme de sélection configuré pour mettre en prise de manière sélective une ou plusieurs parmi la pluralité d'unités de protection de couteau (11) de sorte que le couteau respectif (7) peut être amené de la position désactivée rétractée à la position activée étendue, le mécanisme de sélection comprenant une pluralité d'éléments de mise en prise, chaque élément de mise en prise étant configuré pour se mettre en prise avec l'unité de protection de couteau respective (11) ;
dans lequel l'axe de couteau (9) est continuellement mobile par l'intermédiaire des moyens de guidage (20) par rapport au châssis (2) ; et
dans lequel chaque couteau (7) par le mouvement de l'axe de couteau (9) est configuré pour se mettre en prise avec l'unité de protection de couteau respective (11) afin de prendre soit la position activée étendue soit, alternativement, la position désactivée rétractée.

2. Dispositif de coupe de récolte (1) selon l'une quelconque des revendications précédentes, **caractérisé en ce que** chaque unité de protection de couteau (11) est raccordée de manière pivotante au châssis (2) autour d'un axe commun (22).

3. Dispositif de coupe de récolte (1) selon l'une quelconque des revendications précédentes, **caractérisé en ce que** chaque unité de protection de couteau (11) comprend une tige de mise en prise (17) configurée pour mettre en prise chaque couteau (7), de préférence au niveau d'une partie arrière ou d'une surface arrière (6).

4. Dispositif de coupe de récolte (1) selon l'une quelconque des revendications précédentes, **caractérisé en ce que** chaque unité de protection de couteau (11) comprend au moins une tige et au moins un élément d'absorption de force (12).

5. Dispositif de coupe de récolte (1) selon l'une quelconque des revendications précédentes, **caractérisé en ce que** le mécanisme de sélection comprend un arbre rotatif (13) s'étendant sensiblement perpendiculairement aux fentes (5) et comprenant les éléments de mise en prise.

6. Dispositif de coupe de récolte (1) selon l'une quelconque des revendications précédentes, **caractérisé en ce qu'**il comprend au moins un actionneur, de préférence un actionneur hydraulique, configuré pour actionner l'axe de couteau (9) par rapport au châssis (2).

7. Dispositif de coupe de récolte (1) selon la revendication 6, **caractérisé en ce que** l'au moins un actionneur implique un actionnement manuel, électrique, électromécanique ou hydraulique configuré pour être contrôlé manuellement ou à distance.

8. Dispositif de coupe de récolte (1) selon l'une quelconque des revendications précédentes, **caractérisé en ce que** la pluralité d'éléments de mise en prise comprend une forme d'étoile comptant entre deux et dix bras (24), de préférence entre trois et huit bras (24), de manière préférée entre toutes quatre bras (24) qui sont de manière optionnelle espacés de manière égale le long de la circonférence de l'arbre rotatif (13).

9. Dispositif de coupe de récolte (1) selon l'une quelconque des revendications 3 à 8, **caractérisé en ce que** la surface arrière (6) comprend au moins un renfoncement de mise en prise (8).

10. Dispositif de coupe de récolte (1) selon l'une quelconque des revendications précédentes, **caractérisé en ce qu'**il comprend un élément de blocage mobile configuré pour bloquer l'extension longitudinale d'au moins une unité de protection de couteau (11).

11. Dispositif de coupe de récolte (1) selon l'une quelconque des revendications précédentes, **caractérisé en ce qu'**au moins une unité de protection de couteau (11) comprend une plaque de guidage (19).

12. Procédé de commande automatique d'un dispositif de coupe de récolte (1) d'une machine agricole selon l'une quelconque des revendications précédentes comprenant :
la mise à disposition d'un dispositif de coupe de récolte (1) dans un état inopérant, de préférence lorsque la machine agricole n'est pas en mouvement,
le blocage actif du mouvement longitudinal des unités de protection de couteau (11) de manière à bloquer le mécanisme de sécurité de chacun des couteaux (7),
l'activation du mécanisme de sélection de manière à mettre en prise tous les couteaux (7) avec l'unité de protection de couteau (11) respective,
la mise des couteaux (7) dans la position activée étendue par un mouvement respectif de l'axe de couteau (9) par rapport au châssis (2),
l'arrêt du mouvement de l'axe de couteau (9) lors de la détection d'un état de défaut prédéterminé des couteaux (7),
si un état de défaut prédéterminé est détecté, la vérification manuelle de l'extension correcte de chaque couteau (7) hors de chaque fente respective (5) de la surface de guidage de récolte (3) par un utilisateur, et
le passage des couteaux (7) de la position activée étendue à la position désactivée rétractée.

13. Procédé de commande automatique d'un dispositif de coupe de récolte (1) selon la revendication 12, **caractérisé en ce que** lors de la détection d'un état de défaut prédéterminé des couteaux (7), un signal d'alarme est transmis à l'utilisateur de la machine agricole, de préférence à la cabine du conducteur du véhicule agricole.

14. Procédé de commande automatique d'un dispositif de coupe de récolte (1) selon la revendication 12 ou la revendication 13, **caractérisé en ce qu'**il comprend en outre
le déblocage actif du mouvement longitudinal des unités de protection de couteau (11) de manière à activer le mécanisme de sécurité de chacun des couteaux (7).
